# EUROPÄISCHE PATENTANMELDUNG

(11) **EP 2 392 772 A1**
(43) Veröffentlichungstag der Anmeldung: **07.12.2011**
(21) Anmeldenummer: 10165037.2
(22) Anmeldetag: 07.06.2010
(51) Int. Cl.: E21B 49/00, G01N 15/02, E21B 21/07, E21C 39/00

(54) **Verfahren und Vorrichtung zur Erhöhung einer Ausbeute einer Lagerstätte**

(71) Anmelder: SIEMENS AKTIENGESELLSCHAFT, 80333 München (DE)
(72) Erfinder: Röntzsch, Silke, 01900 Großröhrsdorf (DE); Mütze, Thomas, 09599 Freiberg (DE)

(57) **Zusammenfassung**

Die Erfindung betrifft ein Verfahren und einer Vorrichtung zur Erhöhung einer Ausbeute einer Lagerstätte umfassend ein Gestein, das mindestens ein durch Zerkleinerung des Gesteins freizulegendes Wertstoff-Mineral und mindestens ein weiteres Mineral umfasst, mit folgenden Schritten:
- Durchführen eines Bohrvorgangs mittels eines Bohrgeräts (1) vor einem Abbau des Gesteins (10a),
- Erfassen von mindestens einem vorgegebenen Bohrparameter für das Bohrgerät (1);
- Erfassen mindestens eines, ein aktuelles Bohrverhalten des Bohrgeräts (1) charakterisierenden Messwerts, und
- Durchführen einer rechnerischen Eliminierung einer Abhängigkeit des mindestens einen Messwerts von dem mindestens einen Bohrparameter, wobei sich mindestens ein Gesteinstextur-abhängiger Kennwert ergibt, und wobei der mindestens eine Kennwert als ein Maß für eine Mineralkorngröße des mindestens einen Wertstoff-Minerals im Gestein (10a) und zur Einstellung eines optimalen Zerkleinerungsgrades bei Zerkleinerung des Gesteins verwendet wird.

## Beschreibung

Die Erfindung betrifft ein Verfahren und eine Vorrichtung zur Erhöhung der Ausbeute einer Lagerstätte umfassend ein Gestein, das mindestens ein durch Zerkleinerung des Gesteins freizulegendes Wertstoff-Mineral und mindestens ein weiteres Mineral umfasst.

Um eine Lagerstätte effizient auszubeuten, muss das im Gestein enthaltene Wertstoff-Mineral freigelegt und möglichst vollständig abgetrennt werden. Je nach Mineralkorngröße eines Wertstoff-Minerals sind zu seiner Freilegung unterschiedliche Zerkleinerungsgrade des Gesteins erforderlich. So muss ein Gestein mit Mineralen einer hohen Mineralkorngröße zur Freilegung des Wertstoff-Minerals weniger zerkleinert werden als ein Gestein mit Mineralen geringerer Mineralkorngröße.

Unter der "Mineralkorngröße" des Wertstoff-Minerals wird dabei nicht die Korngröße der Kristallite dieses Minerals verstanden, sondern die lokale räumliche Ausdehnung der Phase an Wertstoff-Mineral im Gestein.

Bisher wurde das abgebaute Gestein auf eine mittlere Mineralkorngröße zerkleinert, wobei ein erster Teil des Gesteins, der ein Wertstoff-Mineral mit einer hohen Mineralkorngröße umfasst, unnötig stark zerkleinert wird, und ein zweiter Teil des Gesteins, der ein Wertstoff-Mineral mit einer geringeren Mineralkorngröße umfasst, ungenügend zerkleinert wird. Die unnötig starke Zerkleinerung des ersten Teils des Gesteins führt zu einem unnötig hohen Energieverbrauch für den Zerkleinerungsvorgang. Dagegen führt die ungenügende Zerkleinerung des zweiten Teils des Gesteins zu einer unzureichenden Freilegung und in Folge zu einer unzureichenden Abtrennbarkeit des Wertstoff-Minerals und somit einer ineffektiven Ausbeutung der Lagerstätte.

Die Mineralkorngröße und Verteilung von Mineralien in einem Gestein wird bisher zeitaufwendig dadurch bestimmt, dass in einer Lagerstätte an verschiedenen Orten Gesteinsproben entnommen und analysiert werden. Dazu werden in Lagerstätten etwa faustgroße Gesteinsbrocken gesammelt und/oder in einem groben Raster Erkundungsbohrungen durchgeführt, um auswertbare Bohrkerne zu erhalten. Diese Gesteinsproben werden im Labor hinsichtlich ihrer mineralogischen und chemischen Zusammensetzung analysiert. Während die chemische Analyse im wesentlichen Art und Umfang der enthaltenen Elemente bestimmt, wird in der mineralogischen Analyse Art und Umfang der enthaltenen Minerale sowie ihre räumliche Anordnung ermittelt. Zur Bestimmung der räumlichen Anordnung der Minerale werden die Gesteinsproben in Richtung definierter Raumachsen angeschliffen. Durch eine optische Analyse der Dünn- oder Anschliffe, beispielsweise unter einem Mikroskop, lässt sich die räumliche Anordnung und Verteilung der Minerale im Gestein erkennen. Eine räumlich weit verteilte Anordnung der Minerale geht mit einer geringen Mineralkorngröße der Minerale einher, während Zusammenballungen von Mineralen an bestimmten Stellen mit einer höheren Mineralkorngröße einhergehen.

Hinsichtlich des Aufbaus einer Lagerstätte bzw. der räumlichen Mineralkorngrößenverteilung des Wertstoff-Minerals in der Lagerstätte können auf diese Weise nur wenige Informationen, und diese nur mit beträchtlicher zeitlicher Verzögerung, bereitgestellt werden.

Eine Lagerstättenmodellierung, d.h. die Erstellung eines Modells der Lagerstätte umfassend die dreidimensionale Aufzeichnung von Gesteinsschichten oder Gesteinsformationen mit unterschiedlicher Mineralkorngröße des Wertstoff-Minerals, ist aufgrund der geringen verfügbaren Menge an Informationen nur begrenzt möglich. Ein auf das lokal vorliegende Gestein, d.h. seinen Gehalt an Wertstoff-Mineral und dessen Mineralkorngröße ausgerichtetes Abbauen und Zerkleinern des Gesteins ist somit nur eingeschränkt möglich.

Die WO 2010/000055 A1 offenbart ein Verfahren und eine Vorrichtung zur, insbesondere kontinuierlichen, vor-Ort Analyse von Bohrklein aus Bohrschlamm. Es wird eine Probe des Bohrkleins, welche repräsentativ für die durchbohrte Gesteinsformation ist, entnommen und hinsichtlich der Art des Gesteins und der chemischen Zusammensetzung analysiert. Gegebenenfalls werden auch Bohrparameter, umfassend die Bohrtiefe, Gammastrahlemissionen und/oder weitere Parameter protokolliert und mit den Analyseergebnissen der Probe korreliert.

Es ist Aufgabe der Erfindung, ein Verfahren und eine Vorrichtung anzugeben, mit welchen eine Mineralkorngröße des mindestens einen Wertstoff-Minerals und ein dieser zugeordneter optimaler Zerkleinerungsgrad für das Gestein in hoher Auflösung ermittelbar ist, um die Ausbeute einer Lagerstätte zu erhöhen.

Die Aufgabe wird gelöst durch ein Verfahren zur Erhöhung einer Ausbeute einer Lagerstätte umfassend ein Gestein, das mindestens ein durch Zerkleinerung des Gesteins freizulegendes Wertstoff-Mineral und mindestens ein weiteres Mineral umfasst, mit folgenden Schritten:
- Durchführen eines Bohrvorgangs mittels eines Bohrgeräts vor einem Abbau des Gesteins,
- Erfassen von mindestens einem vorgegebenen Bohrparameter für das Bohrgerät;
- Erfassen mindestens eines, ein aktuelles Bohrverhalten des Bohrgeräts charakterisierenden Messwerts, und
- Durchführen einer rechnerischen Eliminierung einer Abhängigkeit des mindestens einen Messwerts von dem mindestens einen Bohrparameter, wobei sich mindestens ein Gesteinstextur-abhängiger Kennwert ergibt, und wobei der mindestens eine Kennwert als ein Maß für eine Mineralkorngröße des mindestens einen Wertstoff-Minerals im Gestein und zur Einstellung eines optimalen Zerkleinerungsgrades bei Zerkleinerung des Gesteins verwendet wird.

Die Aufgabe wird durch eine Vorrichtung zur Durchführung des erfindungsgemäßen Verfahrens gelöst, umfassend
- mindestens ein Zerkleinerungsaggregat zur Zerkleinerung des Gesteins, wobei ein Zerkleinerungsgrad des Gesteins veränderbar ist,
- mindestens eine Steuer- und/oder Regelungseinheit zur Einstellung des optimalen Zerkleinerungsgrads an dem mindestens einen Zerkleinerungsaggregat,
- mindestens ein Bohrgerät,
- mindestens eine Einrichtung zur Erfassung des mindestens einen Bohrparameters und des mindestens einen Messwerts, und
- mindestens eine Recheneinheit zum Durchführen einer rechnerischen Eliminierung einer Abhängigkeit des mindestens einen Messwerts von dem mindestens einen Bohrparameter und zur Ermittlung des mindestens einen Gesteinstextur-abhängigen Kennwerts, und
- mindestens eine Übermittlungseinrichtung zur Übermittlung mindestens einer anhand des Maßes ermittelten Stellgröße an die mindestens eine Steuer- und/oder Regelungseinheit zur Einstellung des optimalen Zerkleinerungsgrads am mindestens einen Zerkleinerungsaggregat bei Zerkleinerung des Gesteins.

Die Erfindung nutzt die Erkenntnis, dass die während eines Bohrvorgangs erfassbaren, ein aktuelles Bohrverhalten des Bohrgeräts charakterisierenden Messwerte nicht nur von den Bohrparametern abhängen, sondern weiterhin in direktem Zusammenhang mit der Mineralkorngröße des mindestens einen Wertstoff-Minerals stehen, das in dem durchbohrten Gestein vorhanden ist. Eine gezielte Auswertung der Messwerte, nach einer rechnerischen Eliminierung deren Abhängigkeit von den Bohrparametern, ermöglicht in überraschender Weise hinreichend genaue Rückschlüsse auf die im durchbohrten Gestein vorliegenden Mineralkorngrößen und die Erstellung eines Lagerstättenmodells. Anhand des Modells sind ein gezielter Abbau und ein auf die lokal vorliegende Mineralkorngröße abgestimmtes Zerkleinern des Gesteins möglich, so dass das enthaltene Wertstoff-Mineral immer optimal freigelegt wird. Es resultieren eine besonders effektive Ausbeutung der Lagerstätte und ein kosteneffizienter Abbaubetrieb.

So ist beispielsweise die Bohrgeschwindigkeit unter anderem von der Festigkeit und Zusammensetzung des durchbohrten Gesteins abhängig, wobei eine hohe Festigkeit und/oder eine Anhäufung harter Minerale eine Verringerung der Bohrgeschwindigkeit zur Folge haben. Weiterhin ist die Bohrgeschwindigkeit aber davon abhängig, welches Bohrgerät und Bohrwerkzeug eingesetzt wird. Insbesondere sind hier der Typ, die Geometrie und der Verschleißzustand des Bohrmeißels von Bedeutung. Diese Bohrparameter sind natürlich bei der Bewertung der Bohrgeschwindigkeit zu berücksichtigen

Die rechnerische Eliminierung der Abhängigkeit von den Bohrparametern erfordert eine überschaubare Anzahl von Vorversuchen, in welchen die einzelnen Einflussgrößen ermittelt und miteinander korreliert werden. Die auf diese Weise erstellte Datenbasis wird bevorzugt auf der mindestens einen Recheneinheit hinterlegt und dient zur Ermittlung des lediglich von der Gesteinstextur abhängigen Kennwerts.

In Kenntnis des von der Gesteinstextur abhängigen Kennwerts, der ein Maß für die Mineralkorngröße des Wertstoff-Minerals bildet und zur Erstellung eines Lagerstättenmodells dient, ist eine schnelle und unkomplizierte Ermittlung und Zuordnung des für das durchbohrte Gestein optimalen Zerkleinerungsgrads möglich.

Als optimaler Zerkleinerungsgrad wird dabei ein Zerkleinerungsgrad für das jeweilige Gestein angesehen, bei dem bis zur Freilegung des mindestens einen enthaltenen Wertstoff-Minerals zerkleinert wird, jedoch nicht darüber hinaus.

Das Verfahren und die Vorrichtung ermöglichen eine besonders schnelle und hinreichend genaue Anpassung des Zerkleinerungsgrads an die lokal vorliegende Mineralkorngröße des Wertstoff-Minerals im Gestein. Die Zuordnung des von der Gesteinstextur abhängigen Kennwerts zu einer Mineralkorngröße und in Folge zu einem optimalen Zerkleinerungsgrad für das durchbohrte Gestein erfolgt während des Bohrvorgangs, so dass die Daten pro Bohrloch teufenabhängig und zeitnah zur Verfügung stehen.

Anstelle der Auswertung der bei Kernbohrungen erhaltenen Bohrkerne zur Ermittlung der jeweiligen Gesteinsstruktur kann bei der Erkundung einer Lagerstätte nun einfach das Bohrverhalten eines Bohrgeräts analysiert werden. Die Anzahl der Bohrlöcher kann deutlich erhöht werden, nachdem keine aufwendigen Laboranalysen an Bohrkernen mehr erforderlich sind. Insbesondere können nun auch Bohrungen zur Anbringung von Sprenglöchern zur Ermittlung der jeweiligen Gesteinsstruktur genutzt werden, die in einem engeren Raster als Erkundungsbohrungen gesetzt werden. Sprenglöcher werden typischerweise in einem horizontalen Abstand von 2 bis 5 m abgeteuft, wobei Daten mit einer vertikalen Auflösung im dm-Bereich bereitgestellt werden können. Auf diese Weise ist eine besonders schnelle und genaue Lagerstättenmodellierung und in Folge ein besonders effizienter Abbau der Lagerstätte möglich.

Es hat sich bewährt, wenn der mindestens eine Gesteinstextur-abhängige Kennwert mit vorab ermittelten Kennwerten für das Gestein verglichen wird, denen je eine bestimmte Mineralkorngröße des mindestens einen Wertstoff-Minerals und ein jeweils optimaler Zerkleinerungsgrad zugeordnet ist, wobei bei einer Übereinstimmung des mindestens einen Gesteinstextur-abhängigen Kennwerts mit einem der vorab ermittelten Kennwerte die diesem zugeordnete Mineralkorngröße des Wertstoff-Minerals und der zugeordnete optimale Zerkleinerungsgrad auch dem mindestens einen Gesteinstextur-abhängigen Kennwert zugeordnet werden. Die Erstellung der Datenbasis für diesen Vergleich erfordert eine überschaubare Anzahl an Vorversuchen für das jeweilige Bohrgerät und den jeweiligen Gesteinstyp, um die Korrelation zwischen dem Bohrverhalten des Bohrgeräts und dem durchbohrten Gestein zu bestimmen.

Vorzugsweise wird als Wertstoff-Mineral ein Erzmineral durch Zerkleinerung des Gesteins freigelegt. Als "Erze'" werden natürlich vorkommende Mineralaggregate von wirtschaftlichem Interesse bezeichnet, aus denen durch Bearbeitung ein oder mehrere Wertstoffe extrahiert werden können. Meistens sind dies Minerale, die mehr oder weniger metallische Bestandteile, wie zum Beispiel Eisen, Kupfer, Nickel, Zinn, Zink, Silber, Gold usw. enthalten.

Es ist von Vorteil, wenn während des Bohrvorgangs eine Teufe eines Bohrmeißels des Bohrgeräts und/oder Positionsdaten zur Position des Bohrgeräts in der Lagerstätte erfasst und logisch mit dem an dieser Stelle ermittelten Maß verknüpft werden, und dass beim Abbau des Gesteins an dieser Stelle das zugehörige positionsabhängige Maß zur Einstellung eines optimalen Zerkleinerungsgrades des abgebauten Gesteins verwendet wird. In Kenntnis der in allen drei Dimensionen der Lagerstätte vorliegenden Kennwerte, die die Mineralkorngrößenverteilung des mindestens einen Wertstoff-Minerals in der Lagerstätte repräsentieren, ist eine äußerst genaue Lagerstättenmodellierung möglich, wie bereits erläutert wurde. Um die aktuelle Position des Bohrgeräts während einer Bohrung in der Lagerstätte möglichst genau zu ermitteln, wird insbesondere die Bohrlochneigung gemessen und die Position des Bohransatzpunktes, bevorzugt mittels mindestens einer GPS-Einheit, erfasst.

Die Vorrichtung umfasst bevorzugt weiterhin ein Abbaugerät zum Abbau des Gesteins und/oder zum Fördern bereits in einer Sprengung grob vorzerkleinerten Gesteins, das ebenfalls mindestens eine GPS-Einheit aufweist.

Die Positionsdaten eines Abbaugeräts werden insbesondere durch eine Datenübermittlung per Funk an die mindestens eine Recheneinheit übermittelt. Das Abbaugerät zum Abbau des Gesteins kann durch einen Unstetigbagger, insbesondere einen Löffelbagger oder Flachbagger, oder einen Stetigbagger, wie einen Schaufelradbagger oder Eimerkettenbagger, oder dergleichen gebildet sein. Ein Abbaugerät zum Fördern von bereits mittels einer Sprengung grob vorzerkleinerten Gesteins kann durch einen Radlader gebildet sein.

Das herausgelöste bzw. abgesprengte Gestein wird üblicherweise über ein Materialversorgungssystem verwaltet, in welchem die Lage oder der Lagerplatz des gesprengten oder abgebauten Gesteins hinterlegt ist, und über welches das Abbaugerät angesteuert werden kann. Das abgebaute oder abgesprengte Gestein wird, gegebenenfalls nach Zwischenlagerung, auf Muldenkipper oder Förderbänder aufgegeben und zu dem mindestens einen Zerkleinerungsaggregat befördert oder direkt in das mindestens eine Zerkleinerungsaggregat befördert, wo eine weitere Zerkleinerung des Gesteins bis zum Aufschluss des Wertstoff-Minerals erfolgt.

Der mindestens eine Bohrparameter wird beispielsweise aus einem Andruck des Bohrmeißels des Bohrgeräts und/oder einer Drehzahl des Bohrmeißels und/oder einem Gasvolumenstrom eines Gasstroms zum Abtransport von Bohrklein am Bohrmeißel und/oder einer Schlagfrequenz des Bohrmeißels und/oder einer bisherigen Einsatzdauer des Bohrmeißels und/oder Material-oder Geometriedaten des Bohrmeißels und dergleichen gebildet. Die Schlagfrequenz ergibt sich dabei unter anderem aus Andruck- und Gasstromdaten.

Der mindestens eine, das aktuelle Bohrverhalten charakterisierende Messwert wird insbesondere aus der Gruppe an Messwerten umfassend eine Bohrgeschwindigkeit, ein resultierendes Drehmoment am Kraftdrehkopf des Bohrmeißels, einen Gasdruck des Gasstroms zum Abtransport von Bohrklein am Bohrmeißel, einen Energieeintrag in das Bohrgerät, ein Schwingverhalten eines Bohrgestänges des Bohrgeräts und dergleichen ausgewählt.

Zur Erfassung des mindestens einen Bohrparameters und/oder des mindestens einen, das aktuelle Bohrverhalten des Bohrgeräts charakterisierenden Messwerts dient mindestens eine Einrichtung, wobei bereits am Bohrgerät vorhandene Sensoren verwendet oder an das Bohrgerät zusätzlich angebaute Sensoren genutzt werden können.

In einer bevorzugten Ausgestaltung der Vorrichtung ist am mindestens einen Bohrgerät mindestens eine Einrichtung in Form mindestens eines Körperschallsensors zur Erfassung eines, das aktuelle Bohrverhalten charakterisierenden Messwerts in Form eines Schwingverhaltens des Bohrgestänges des Bohrgeräts vorhanden. Es hat sich gezeigt, dass die Vibration des Bohrgestänges, unter Berücksichtigung der Bohrparameter, in einfacher Weise auf die Eigenschaften des Gesteins, das momentan durchbohrt wird, schließen lässt.

Die Figuren 1 bis 4 sollen mögliche Vorrichtungen und Verfahren gemäß der Erfindung beispielhaft erläutern. So zeigt
- FIG 1: schematisch eine Vorrichtung zur Durchführung eines Verfahrens und einen Verfahrensablauf;
- FIG 2: schematisch eine weitere Vorrichtung zur Durchführung eines Verfahrens und einen Verfahrensablauf;
- FIG 3: schematisch eine Darstellung eines Lagerstättenmodells; und
- FIG 4: schematisch die möglichen Daten- und Stoffströme für ein Verfahren.

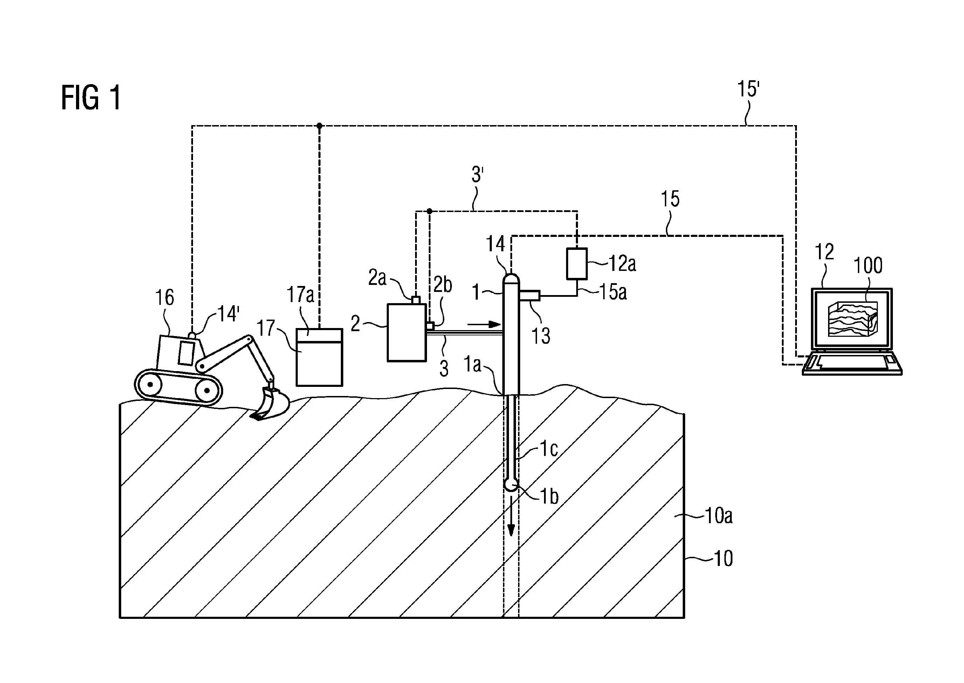

FIG 1 zeigt schematisch eine Vorrichtung zur Durchführung eines Verfahrens im Bereich einer Lagerstätte 10 mit im Schnitt dargestelltem Gestein 10a. Die Vorrichtung umfasst ein Bohrgerät 1 mit einem Bohrmeißel 1b und einem Bohrgestänge 1c im Bereich eines Bohransatzpunktes 1a und eine Einheit 2 zur Bereitstellung eines Gasstroms, der am Bohrmeißel 1b entstehendes Bohrklein aufnimmt und in Richtung Erdoberfläche abtransportiert. Die Einheit 2 ist dazu über mindestens eine Gasleitung 3 mit dem Bohrgerät 1 verbunden. An der Einheit 2 befindet sich eine Einrichtung 2a in Form eines Gasvolumenstromsensors, der zur Erfassung eines Bohrparameters in Form des Gasvolumenstroms des Gasstroms dient. An der Einheit 2 befindet sich weiterhin eine weitere Einrichtung 2b in Form eines Gasdrucksensors zur Erfassung eines, das Bohrverhalten charakterisierenden Messwerts in Form des Gasdrucks des Gasstroms. Sowohl der Bohrparameter als auch der Messwert werden an eine Recheneinheit 12 übermittelt, die außerhalb des Bohrgeschehens angeordnet ist. Während die Bohrparameter üblicherweise von dem Bedienpersonal und/oder diversen Geräten an die Recheneinheit 12 übergeben werden, erfolgt die Übermittlung der Messwerte an die Recheneinheit 12 bevorzugt per Funk 15.

Um die Bohrposition des Bohrgeräts 1 am Bohransatzpunkt 1a in der Lagerstätte 10 erfassen zu können, weist das Bohrgerät 1 eine GPS-Einheit 14 auf. Die Positionsdaten, insbesondere die aktuelle Teufe des Bohrmeißels 1b sowie die Bohrlochneigung, werden insbesondere per Funk 15 an die Recheneinheit 12 übermittelt.

Am Bohrgerät 1 ist bevorzugt weiterhin ein Körperschallsensor 13 installiert, welcher zur Erfassung eines, das aktuelle Bohrverhalten charakterisierenden Messwerts, hier des Schwingverhaltens des Bohrgestänges 1c des Bohrgeräts 1, dient. In Kenntnis der am Bohrgerät 1 vorgegebenen Bohrparameter und des Schwingverhaltens des Bohrgestänges 1c kann eine Abhängigkeit des Schwingverhaltens von den Bohrparametern rechnerisch mittels einer weiteren Recheneinheit 12a, welche in räumlicher Nähe zum Bohrgerät 1 angeordnet ist, eliminiert werden. Die Daten zum Schwingungsverhalten sind so umfangreich, dass eine Datenübertragung dieser per Funk an die Recheneinheit 12 nur schwer realisierbar ist. Allerdings kann eine, in der vor Ort installierten weiteren Recheneinheit 12a vorgenommene Auswertung der Schwingungsdaten per Funk 15 von der weiteren Recheneinheit 12a an die entfernt angeordnete Recheneinheit 12 übermittelt werden.

Die Vorrichtung umfasst gemäß FIG 1 weiterhin ein Abbaugerät 16 zum unmittelbaren Abbau des gewachsenen Gesteins 10a, das ebenfalls eine GPS-Einheit 14' aufweist. Die Positionsdaten des Abbaugeräts 16 werden insbesondere durch eine Datenübermittlung 15' per Funk an die Recheneinheit 12 übermittelt. Das Abbaugerät 16 ist hier entweder durch einen Unstetigbagger, insbesondere einen Löffelbagger oder Flachbagger, oder einen Stetigbagger, wie einen Schaufelradbagger oder Eimerkettenbagger, oder dergleichen gebildet.

Das Abbaugerät 16 übergibt das lokal abgebaute Gestein 10a' mittelbar, z.B. nach einer über ein Materialverwaltungssystem überwachten Zwischenlagerung, oder unmittelbar an ein Zerkleinerungsaggregat 17, welche eine Steuer- und/oder Regelungseinheit 17a zur Einstellung des optimalen Zerkleinerungsgrads umfasst.

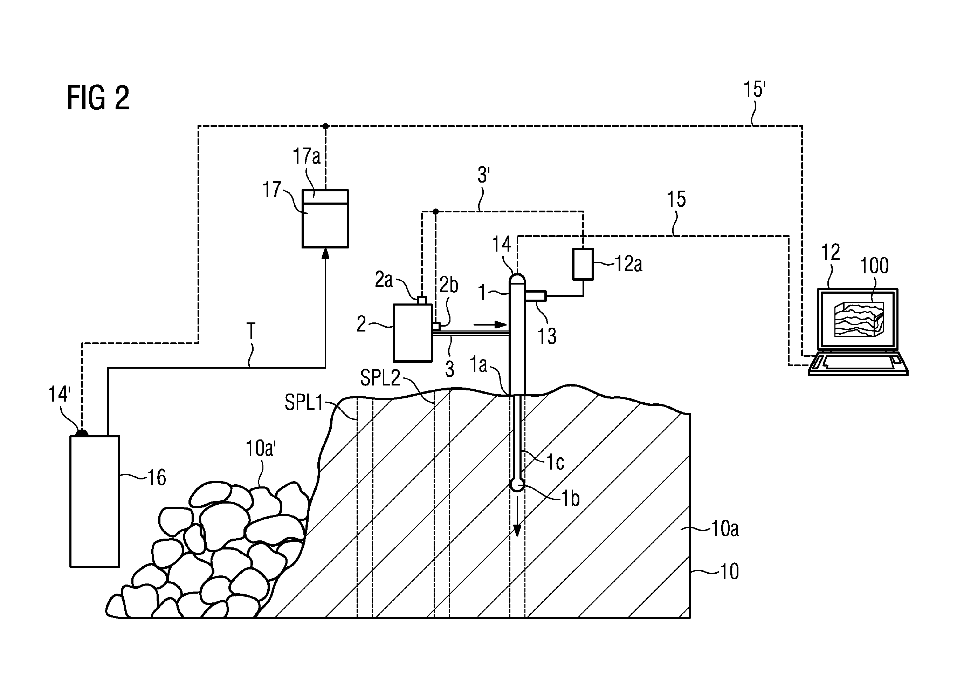

FIG 2 zeigt schematisch eine weitere Vorrichtung zur Durchführung eines Verfahrens im Bereich einer Lagerstätte 10 mit im Schnitt dargestelltem Gestein 10a. Gleiche Bezugszeichen wie in FIG 1 bezeichnen gleiche Elemente.

Im Unterschied zu FIG 1 ist hier das Gestein 10a mit Sprenglöchern SPL1, SPL2 versehen, welche das Bohrgerät 1 ausgebildet hat. Bevorzugt werden in einem horizontalen Abstand von 2 bis 5 m im Gestein 10a eine Anzahl von Sprengloch-Bohrungen eingebracht. Das Gestein 10a wird mittels einer Sprengung aus dem gewachsenen Gestein 10a herausgelöst, wobei anschließend das grob vorzerkleinerte Gestein 10a' über ein Abbaugerät 16, z.B. in Form eines Radladers, aufgenommen wird. Es kann nun, über ein Materialverwaltungssystem erfasst und daher wiederauffindbar, zwischengelagert werden oder direkt zum Zerkleinerungs-aggregat 17 transportiert werden (siehe Pfeil T).

Je nach Abbauort des Gesteins 10a, welcher der Recheneinheit 12 aufgrund der GPS-Einheit 14' am Abbaugerät 16 bekannt ist, wird in Abhängigkeit des zuvor ermittelten, optimalen Zerkleinerungsgrads für diesen Abbauort und die Abbauteufe dem Zerkleinerungsaggregat 17 bzw. seiner Steuer- und/oder Regelungseinheit 17a, insbesondere mittels einer Datenübermittlung 15' per Funk, eine Stellgröße übermittelt. Die kann automatisch mittels der Recheneinheit 12 oder selbstverständlich auch durch ein Bedienpersonal vor Ort erfolgen.

Der optimale Zerkleinerungsgrad wird dabei gemäß dem Gesteins-textur abhängigen Kennwert von der Recheneinheit 12 derart vorgegeben, dass das lokal im Gestein 10a vorhandene Wertstoff-Mineral optimal freigelegt wird. Das Zerkleinerungsaggregat 17 zerkleinert nun nach entsprechender, insbesondere automatischer Einstellung seines Zerkleinerungswerkzeugs entsprechend dem jeweils vorgegebenen optimalen Zerkleinerungsgrad das Gestein. Eine nahezu vollständige Abtrennung des freigelegten Wertstoff-Minerals von dem weiteren Mineral kann nun erfolgen, so dass eine effiziente Ausbeutung der Lagerstätte 10 durchgeführt wird.

Die Recheneinheit 12 dient zur Durchführen einer rechnerischen Eliminierung einer Abhängigkeit des mindestens einen Messwerts von dem mindestens einen Bohrparameter und zur Ermittlung des mindestens einen Gesteinstextur-abhängigen Kennwerts als Maß zur Einstellung eines optimalen Zerkleinerungsgrades des Gesteins 10a. Insbesondere entspricht die Recheneinheit 12 dabei auch der Übermittlungseinrichtung zur Übermittlung mindestens einer anhand des Maßes ermittelten Stellgröße an die mindestens eine Steuer- und/oder Regelungseinheit 17a zur Einstellung des optimalen Zerkleinerungsgrads am mindestens einen Zerkleinerungsaggregat 17. Allerdings kann die Übermittlungseinrichtung auch getrennt von der Recheneinheit 12 vorhanden sein und über das Bedienpersonal manuell mit den Daten für die Stellgröße versorgt werden. Bei einem Abbau des Gesteins 10a an einer bestimmten Bohrposition bzw. Entnahme von abgebautem Gestein 10a' aus der Lagerstätte 10 oder aus einem Zwischenlager wird das Zerkleinerungsaggregat 17 entsprechend gesteuert und/oder geregelt.

In Kenntnis der am Bohrgerät 1 vorgegebenen Bohrparameter und beispielsweise des Schwingverhaltens des Bohrgestänges 1c kann eine Abhängigkeit des Schwingverhaltens von den Bohrparametern rechnerisch mittels der Recheneinheit 12 eliminiert werden. Es ergibt sich ein Gesteinstextur-abhängiger Kennwert, der als Maß zur Ermittlung des optimalen Zerkleinerungsgrads für dieses Gestein herangezogen wird.

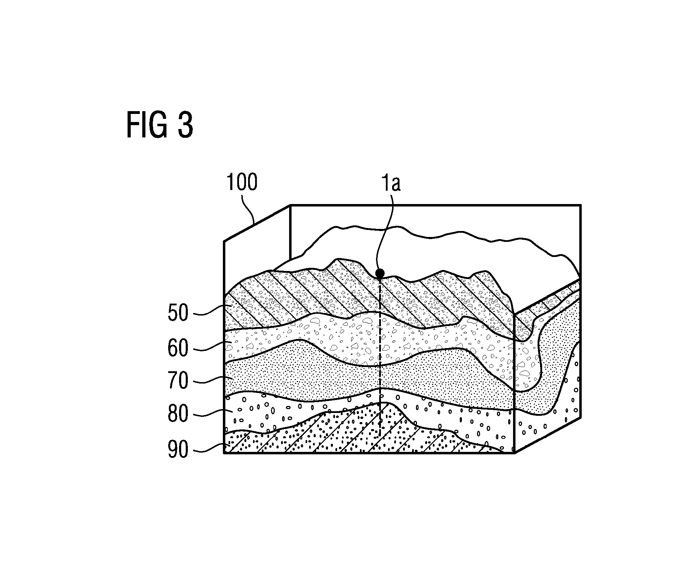

Weiterhin kann mittels der Recheneinheit 12 ein Lagerstättenmodell 100 erstellt werden, siehe FIG 3, aus dem die Verteilung der mineralischen Phasen in der Lagerstätte hervorgeht.

Anhand der ermittelten Mineralkorngrößen des Wertstoff-Minerals an den unterschiedlichen Bohrstellen in der Lagerstätte 10 und insbesondere weiterhin bei unterschiedlichen Teufen des Bohrmeißels im Gestein, kann bei einer entsprechend hohen Anzahl von Bohrstellen bzw. Sprenglöchern ein Lagerstättenmodell 100 erstellt werden, das ein hinreichend genaues dreidimensionales Abbild der Lagerstätte 10 wiedergibt. Im Lagerstättenmodell 100 ist die räumliche Lage 50, 60, 70, 80, 90 von Gestein mit unterschiedlicher lokaler Mineralkorngröße des Wertstoff-Minerals ersichtlich. Ausgehend vom Bohransatzpunkt 1a wurden fünf in unterschiedlicher Teufe liegende Gesteinsschichten mit Wertstoff-Mineral unterschiedlicher Mineralkorngröße ermittelt.

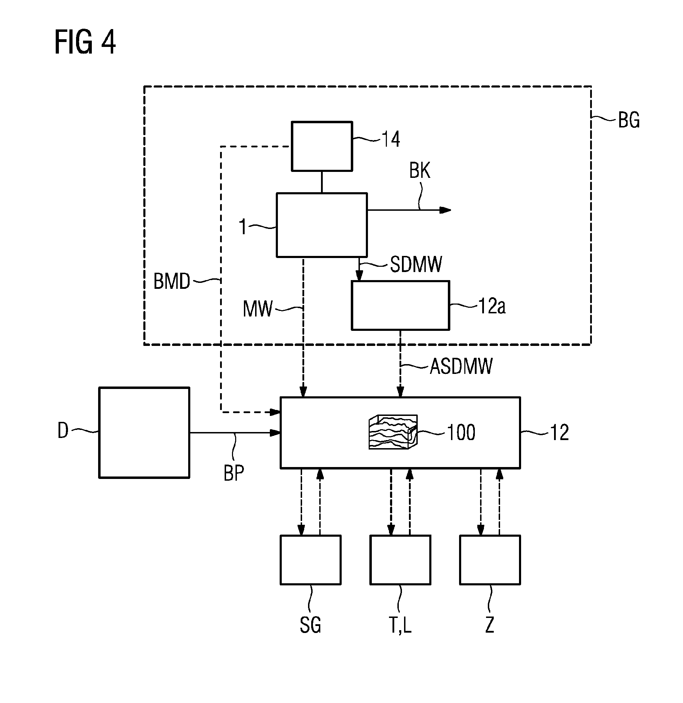

FIG 4 zeigt schematisch Daten- und Stoffströme für ein mögliches Verfahren. Die Recheneinheit 12 wird über eine Datenquelle D mit den in der Regel bekannten Bohrparametern BP versorgt, wobei als Datenquelle das Bedienpersonal und/oder sonstige elektronische Geräte dienen kann/können. Es werden Bohrparameter BP in Form von Daten zur Art des Bohrgeräts 1, des Typs und der Geometrie des Bohrmeißels des Bohrgeräts 1, der Einsatzdauer, während der der Bohrmeißel bereits betrieben wurde, des Andrucks und/oder der Drehzahl des Bohrmeißels usw. übertragen. Dabei kommt in der Regel eine drahtbehaftete Datenleitung zum Einsatz. Im Bohrbetrieb werden vom Bohrgerät 1 bzw. daran vorhandenen Messwertaufnehmern aktuelle, das Bohrverhalten charakterisierende Messwerte MW an die Recheneinheit 12 übermittelt. Bei den Messwerten MW handelt es sich beispielsweise um eine Bohrgeschwindigkeit, einen Energieeintrag in das Bohrgerät 1 usw. Weiterhin werden von der GPS-Einheit 14 die aktuellen Positionsdaten BMD des Bohrgeräts 1, insbesondere des Bohrmeißels, an die Recheneinheit 12 übermittelt.

Nachdem die Messwerte MW und die Positionsdaten BMD im Bereich des Bohrgeschehens BG aufgenommen werden, werden diese bevorzugt drahtlos (siehe gestrichelte Linien) an die räumlich getrennt davon angeordnete Recheneinheit 12 übermittelt.

Messwerte MW zum Bohrverhalten, die in Form von Schwingungsdaten SDMW vorliegen, werden in der weiteren Recheneinheit 12a direkt im Bereich des Bohrgeschehenes BG ausgewertet und die Auswertung anschließend drahtlos an die Recheneinheit 12 übermittelt.

Auf Basis des in der Recheneinheit 12 ermittelten Modells 100 erfolgt bevorzugt eine Steuerung des kompletten Abbaubetriebs im Bereich der Lagerstätte 10, vor allem hinsichtlich eines Abbaus oder einer Sprengung SG sowie eines Transports T, einer Lagerung L und einer Gesteinszerkleinerung Z des abgebauten Gesteins. So kann in Kenntnis des Modells 100 und ggf. der lokalen Festigkeit des Gesteins z.B. die lokal eingesetzte Menge an Sprengstoff angepasst werden, das abgebaute Gestein je nach Eigenschaft an unterschiedlichen Orten gelagert werden, wobei insbesondere Gestein gleicher Mineralkorngröße des Wertstoff-Minerals zusammenfasst wird, in gewünschter Reihenfolge zum Zerkleinerungsaggregat befördert und dort in Abhängigkeit von der Mineralkorngröße des Wertstoff-Minerals unterschiedlich stark zerkleinert wird.

Die Figuren zeigen dabei lediglich ein Beispiel für die Vorrichtung und das Verfahren auf. Ein Fachmann ist ohne weiteres in der Lage, die erfindungsgemäße Vorrichtung und das erfindungsgemäße Verfahren an die jeweilige Lagerstätte und Abbausituation anzupassen, um den vorhandenen Gesteinsformationen lokal einen optimalen Zerkleinerungsgrad zuzuweisen. So kann natürlich, je nach Lagerstätte, vertikal und/oder horizontal und/oder schräg ins Erdreich gebohrt werden. Weiterhin können andere Bohrparameter oder Messwerte erfasst werden, um den Gesteinstexur-abhängigen Kennwert als Maß für die Mineralkorngröße des Wertstoff-Minerals und zur Einstellung eines optimalen Zerkleinerungsgrades des Gesteins zu ermitteln.

## Patentansprüche

1. Verfahren zur Erhöhung einer Ausbeute einer Lagerstätte (10) umfassend ein Gestein (10a), das mindestens ein durch Zerkleinerung des Gesteins (10a) freizulegendes Wertstoff-Mineral und mindestens ein weiteres Mineral umfasst, mit folgenden Schritten:
- Durchführen eines Bohrvorgangs mittels eines Bohrgeräts (1) vor einem Abbau des Gesteins (10a),
- Erfassen von mindestens einem vorgegebenen Bohrparameter für das Bohrgerät (1);
- Erfassen mindestens eines, ein aktuelles Bohrverhalten des Bohrgeräts (1) charakterisierenden Messwerts, und
- Durchführen einer rechnerischen Eliminierung einer Abhängigkeit des mindestens einen Messwerts von dem mindestens einen Bohrparameter, wobei sich mindestens ein Gesteinstextur-abhängiger Kennwert ergibt, und wobei der mindestens eine Kennwert als ein Maß für eine Mineralkorngröße des mindestens einen Wertstoff-Minerals im Gestein (10a) und zur Einstellung eines optimalen Zerkleinerungsgrades bei Zerkleinerung des Gesteins (10a) verwendet wird.

2. Verfahren nach Anspruch 1,
wobei der mindestens eine Gesteinstextur-abhängige Kennwert mit vorab ermittelten Kennwerten für das Gestein (10a) verglichen wird, denen je eine bestimmte Mineralkorngröße des mindestens einen Wertstoff-Minerals und ein jeweils optimaler Zerkleinerungsgrad zugeordnet ist, wobei bei einer Übereinstimmung des mindestens einen Gesteinstextur-abhängigen Kennwerts mit einem der vorab ermittelten Kennwerte die diesem zugeordnete Mineralkorngröße des Wertstoff-Minerals und der zugeordnete optimale Zerkleinerungsgrad auch dem mindestens einen Gesteinstextur-abhängigen Kennwert zugeordnet werden.

3. Verfahren nach Anspruch 1 oder Anspruch 2,
wobei als Wertstoff-Mineral ein Erzmineral durch Zerkleinerung des Gesteins (10a) freigelegt wird.

4. Verfahren nach einem der Ansprüche 1 bis 3,
wobei während des Bohrvorgangs eine Teufe eines Bohrmeißels (1b) des Bohrgeräts (1) und/oder Positionsdaten zur Position des Bohrgeräts (1) in der Lagerstätte (10) erfasst und logisch mit dem an dieser Stelle ermittelten Maß verknüpft werden, und dass beim Abbau des Gesteins (10a) an dieser Stelle das zugehörige positionsabhängige Maß zur Einstellung des optimalen Zerkleinerungsgrades für das abgebaute Gestein verwendet wird.

5. Verfahren nach einem der Ansprüche 1 bis 4,
wobei der mindestens eine Bohrparameter aus einem Andruck des Bohrmeißels (1b) des Bohrgeräts (1) und/oder einer Drehzahl des Bohrmeißels (1b) und/oder einem Gasvolumenstrom eines Gasstroms zum Abtransport von Bohrklein am Bohrmeißel (1b) und/oder einer Schlagfrequenz des Bohrmeißels (1b) und/oder einer bisherigen Einsatzdauer des Bohrmeißels (1b) und/oder Material- oder Geometriedaten des Bohrmeißels (1b) gebildet wird

6. Verfahren nach einem der Ansprüche 1 bis 5,
wobei der mindestens eine, das aktuelle Bohrverhalten charakterisierende Messwert aus der Gruppe an Messwerten umfassend eine Bohrgeschwindigkeit, ein resultierendes Drehmoment am Kraftdrehkopf des Bohrmeißels (1b), einen Gasdruck des Gasstroms zum Abtransport von Bohrklein am Bohrmeißel (1b), einen Energieeintrag in das Bohrgerät (1) und ein Schwingverhalten eines Bohrgestänges des Bohrgeräts (1) ausgewählt wird.

7. Verfahren nach einem der Ansprüche 1 bis 6,
**dadurch gekennzeichnet, dass** der mindestens eine Gesteinstextur-abhängige Kennwert weiterhin zur Steuerung eines Abbau-oder Sprengbetriebs und/oder eines Transportbetriebs und/oder eines Materialverwaltungsbetriebs im Bereich der Lagerstätte (10) eingesetzt wird.

8. Vorrichtung zur Durchführung eines Verfahren nach einem der Ansprüche 1 bis 7, umfassend
- mindestens ein Zerkleinerungsaggregat (17) zur Zerkleinerung des Gesteins (10a) , wobei ein Zerkleinerungsgrad des Gesteins (10a) veränderbar ist,
- mindestens eine Steuer- und/oder Regelungseinheit (17a) zur Einstellung des optimalen Zerkleinerungsgrads an dem mindestens einen Zerkleinerungsaggregat (17),
- mindestens ein Bohrgerät (1),
- mindestens eine Einrichtung zur Erfassung des mindestens einen Bohrparameters und des mindestens einen Messwerts, und
- mindestens eine Recheneinheit (12) zum Durchführen einer rechnerischen Eliminierung einer Abhängigkeit des mindestens einen Messwerts von dem mindestens einen Bohrparameter und zur Ermittlung des mindestens einen Gesteinstextur-abhängigen Kennwerts, und
- mindestens eine Übermittlungseinrichtung zur Übermittlung mindestens einer anhand des Maßes ermittelten Stellgröße an die mindestens eine Steuer- und/oder Regelungseinheit (17a) zur Einstellung des optimalen Zerkleinerungsgrads am mindestens einen Zerkleinerungsaggregat (17) bei Zerkleinerung des Gesteins.

9. Vorrichtung nach Anspruch 8,
wobei die mindestens eine Übermittlungseinrichtung der mindestens einen Recheneinheit entspricht.

10. Vorrichtung nach Anspruch 8 oder Anspruch 9,
wobei am mindestens einen Bohrgerät (1) mindestens eine Einrichtung zur Erfassung des mindestens einen Messwerts in Form mindestens eines Körperschallsensors (13) zur Erfassung eines Schwingverhaltens des Bohrgestänges (1c) des Bohrgeräts (1) vorhanden ist.

11. Vorrichtung nach einem der Ansprüche 8 bis 10,
wobei die mindestens eine Recheneinheit (12) weiterhin eingerichtet ist, den mindestens einen Gesteinstextur-abhängigen Kennwert weiterhin zur Steuerung eines Abbau- oder Sprengbetriebs und/oder eines Transportbetriebs und/oder eines Materialverwaltungsbetriebs im Bereich der Lagerstätte (10) einzusetzen.

12. Vorrichtung nach einem der Ansprüche 8 bis 11,
wobei die Vorrichtung weiterhin ein Abbaugerät (16) für das Gestein (10a) umfasst.

13. Vorrichtung nach einem der Ansprüche 8 bis 12,
wobei das Bohrgerät (1) und/oder das Abbaugerät (16) eine GPS-Einheit (14, 14') aufweisen.
